# EUROPEAN PATENT APPLICATION

(11) **EP 4 644 135 A1**
(43) Date of publication of application: **05.11.2025**
(21) Application number: 25173976.9
(22) Date of filing: 02.05.2025
(51) Int. Cl.: B60C 11/03, B60C 11/12

(54) **HEAVY DUTY TIRE**

(30) Priority: 03.05.2024 KR 20240059117
(71) Applicant: HANKOOK TIRE & TECHNOLOGY CO., LTD, Gyeonggi-do 13494 (KR)
(72) Inventor: Lim, Taehyeong, 34127 Yeseong-gu, Daejeon (KR)
(74) Representative: Witte, Weller & Partner Patentanwälte mbB

(57) **Abstract**

The heavy duty tire includes a tread (100) contacting the road surface, sipes formed in the axial direction (D1) of the tread and arranged at predetermined intervals in the circumferential direction (D2) of the tread, and grooves formed in the circumferential direction of the tread and arranged at predetermined intervals in the axial direction (D1) of the tread, wherein the sipes comprise a first sipe (210) including a first lateral channel (211) provided on the surface side of the tread (100), a second sipe (220) including a second lateral channel (221) provided below the first lateral channel (211) in the depth direction (D3) of the tread, and a third sipe (230) including a third lateral channel (231) provided below the second lateral channel (221) in the depth direction (D3) of the tread, and the grooves comprise a first groove including a first main channel (311) communicating with the third lateral channel (231), a second groove including a second main channel communicating with the second lateral channel ( 221) and the first main channel (311), and a third groove including a third main channel communicating with the first lateral channel (211) and the first main channel (311).

## Description

### BACKGROUND

### 1. Field

The disclosure relates to a heavy duty tire, and more particularly, to a heavy duty tire that can secure the rigidity of the tread while maintaining excellent drainage performance even when the tread is worn.

### 2. Description of the Related Art

Generally, tires for vehicles serve to support the load of the vehicle, transmit driving and braking forces to the road surface, absorb shocks from the road, and help change and maintain the direction of the vehicle.

The tread of such a tire, which directly contacts the road surface, typically includes various grooves to enhance braking, driving, and traction performance, improve steering stability, and provide heat dissipation and drainage. However, these grooves often reduce the rigidity of the tread.

In particular, heavy duty tires, designed for large vehicles such as trucks, buses, vans, large pickup trucks, and other commercial vehicles, require a structure that ensures tread rigidity as well as drainage performance and steering stability.

However, typical groove structures designed to improve drainage often reduce tread rigidity, and as the tread wears, changes in the groove shape can lead to decreased drainage performance.

### SUMMARY

It is an embodiment of the disclosure to provide a heavy duty tire that can ensure tread rigidity and maintain drainage performance through a specific structure of sipes and grooves.

It is an embodiment of the disclosure to provide a heavy duty tire that maintains drainage performance even when the tread is worn.

Additional aspects of the disclosure will be set forth in part in the description which follows and, in part, will be obvious from the description, or may be learned by practice of the disclosure.

In accordance with an embodiment of the disclosure, there is provided a heavy duty tire including a tread contacting the road surface, sipes formed in the axial direction of the tread and arranged at predetermined intervals in the circumferential direction of the tread, and grooves formed in the circumferential direction of the tread and arranged at predetermined intervals in the axial direction of the tread, wherein the sipes comprise a first sipe including a first lateral channel provided on the surface side of the tread, a second sipe including a second lateral channel provided below the first lateral channel in the depth direction of the tread, and a third sipe including a third lateral channel provided below the second lateral channel in the depth direction of the tread, and the grooves comprise a first groove including a first main channel communicating with the third lateral channel, a second groove including a second main channel communicating with the second lateral channel and the first main channel, and a third groove including a third main channel communicating with the first lateral channel and the first main channel.

The sipes are sequentially and repeatedly arranged along the circumferential direction of the tread in the order of the first sipe, the second sipe, and the third sipe, and the grooves are arranged such that the third groove is located near the first sipe, the second groove near the second sipe, and the first groove near the third sipe in the circumferential direction of the tread.

The sipes are sequentially and repeatedly arranged along the circumferential direction of the tread in the order of the first sipe, the third sipe, and the second sipe, and the grooves are arranged such that the third groove is located near the first sipe, the second groove near the second sipe, and the first groove near the third sipe in the circumferential direction of the tread.

The sipes are divided in the axial direction of the tread by the grooves, and the third sipes are disposed adjacent to both sides of the first sipe in the axial direction of the tread, the first sipes are disposed adjacent to both sides of the second sipe in the axial direction, and the second sipes are disposed adjacent to both sides of the third sipe in the axial direction.

The lower end of the first lateral channel is located at the same height in the depth direction of the tread as the upper end of the second lateral channel, and the lower end of the second lateral channel is located at the same height in the depth direction as the upper end of the third lateral channel.

The first, second, and third grooves are formed continuously in the circumferential direction of the tread.

The second main channel has a height in the depth direction of the tread that is between 80% to 120% of the height of the second lateral channel, and the third main channel has a height in the depth direction of the tread that is between 80% to 120% of the height of the first lateral channel.

The lengths of the second and third main channels in the circumferential direction of the tread are 5% to 10% longer or shorter than the interval between adjacent sipes in the circumferential direction of the tread.

Both ends of the second and third main channels in the circumferential direction of the tread extend at least 5 mm longer than the sipes adjacent thereto in the circumferential direction of the tread.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a perspective view showing the overall appearance of a heavy duty tire according to an embodiment of the present invention.
FIG. 2 is a perspective view showing the tread in an initial wear state of a heavy duty tire according to an embodiment of the present invention.
FIG. 3 is a top view of the tread in an initial wear state of a heavy duty tire according to an embodiment of the present invention.
FIG. 4 is a perspective view showing the groove structure of a heavy duty tire according to an embodiment of the present invention.
FIG. 5A to 5C are cross-sectional views showing first to third groove regions of a heavy duty tire according to an embodiment of the present invention.
FIG. 6 is a perspective view of the tread in an intermediate wear state of a heavy duty tire according to an embodiment of the present invention.
FIG. 7 is a top view of the tread in an intermediate wear state of a heavy duty tire according to an embodiment of the present invention.
FIG. 8 is a perspective view of the tread in a final wear state of a heavy duty tire according to an embodiment of the present invention. and
FIG. 9 is a top view of the tread in a final wear state of a heavy duty tire according to an embodiment of the present invention.

### DETAILED DESCRIPTION

Hereinafter, embodiments of the disclosure will be described in detail with reference to the accompanying drawings. The following embodiments are provided to sufficiently transfer the concepts of the disclosure to one of ordinary skill in the technical art to which the disclosure belongs. However, the disclosure is not limited to these embodiments and may be embodied in another form. In the drawings, parts that are irrelevant to the descriptions may not be shown in order to clarify the disclosure, and also, for easy understanding, the sizes of components are more or less exaggeratedly shown.

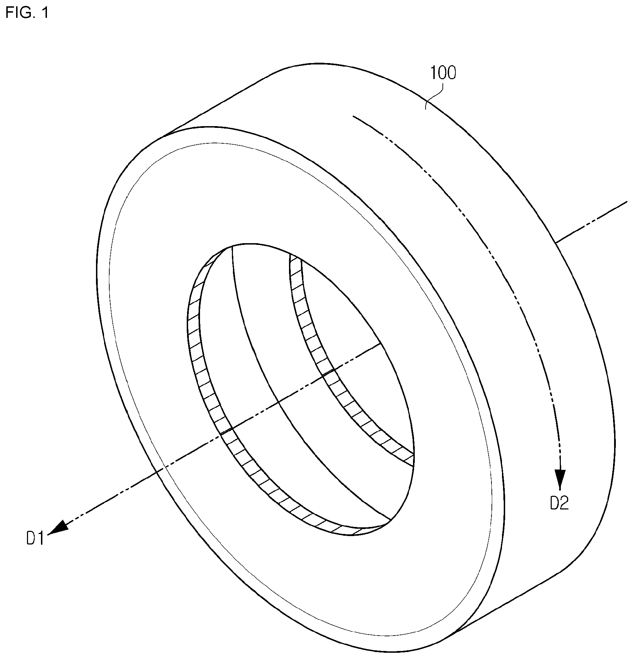

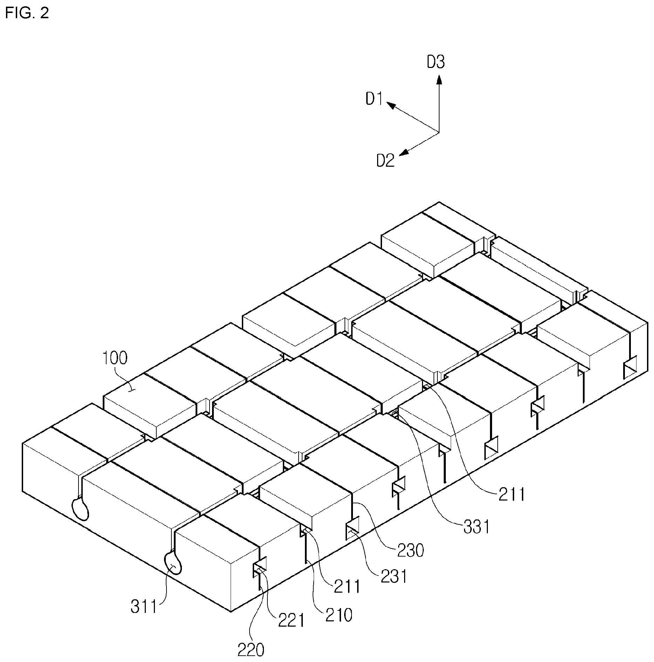

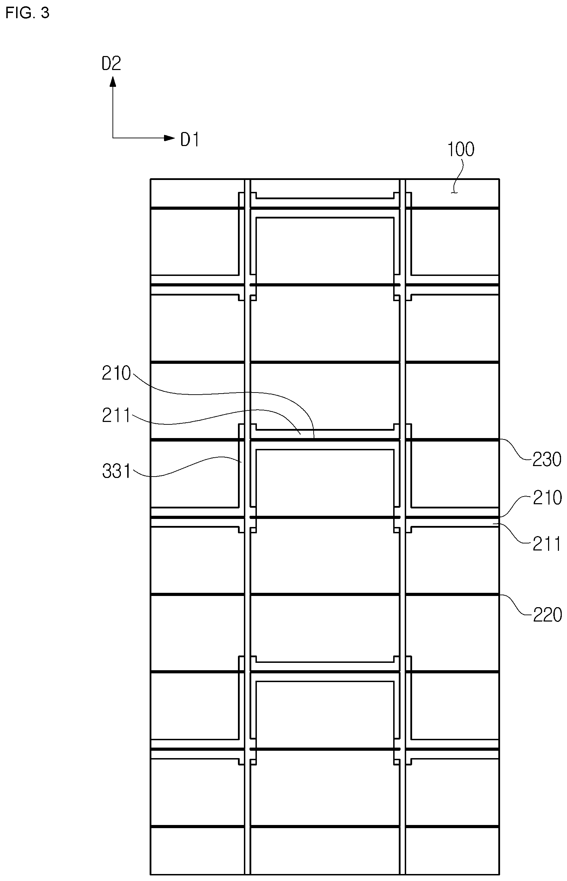

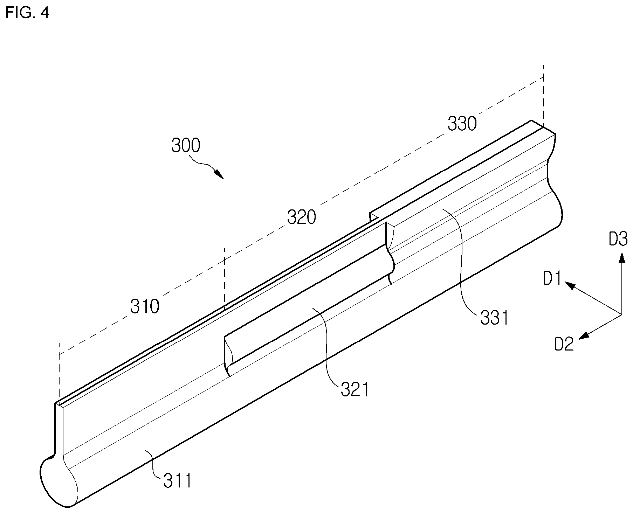

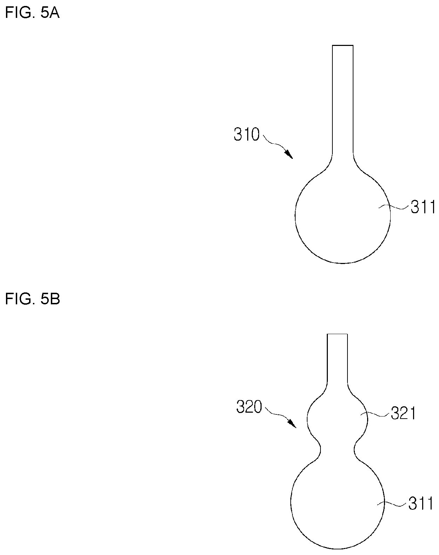

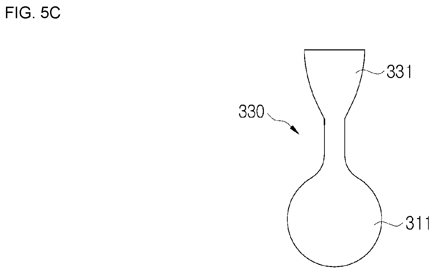

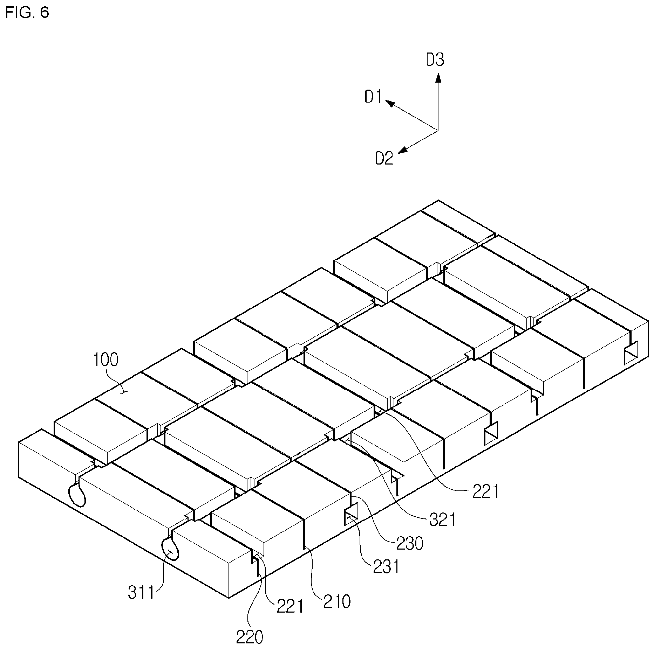

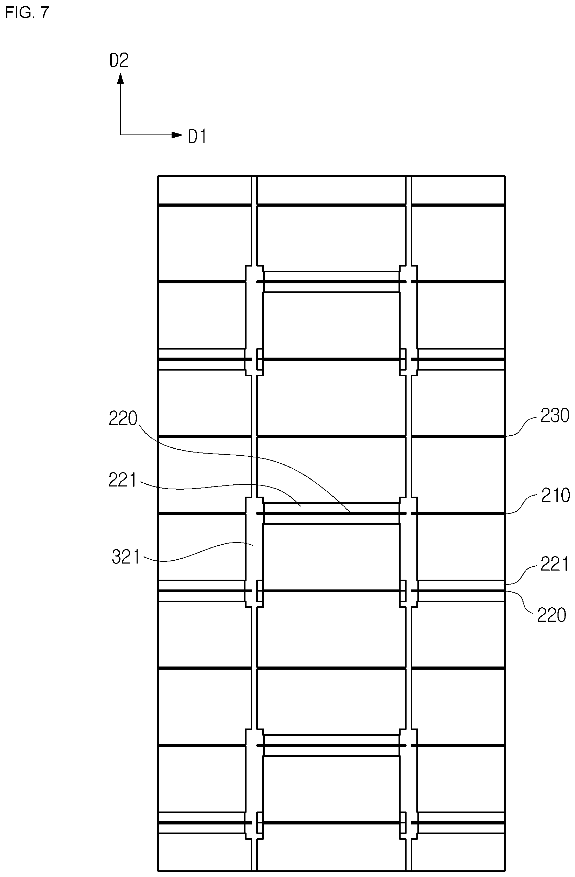

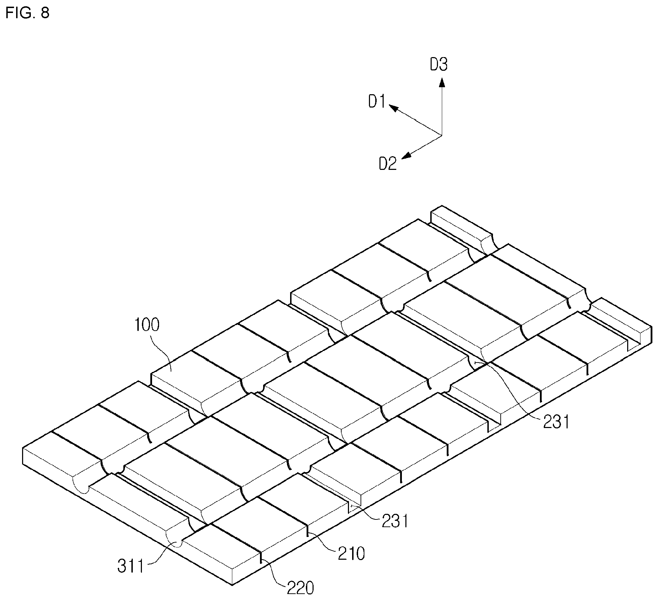

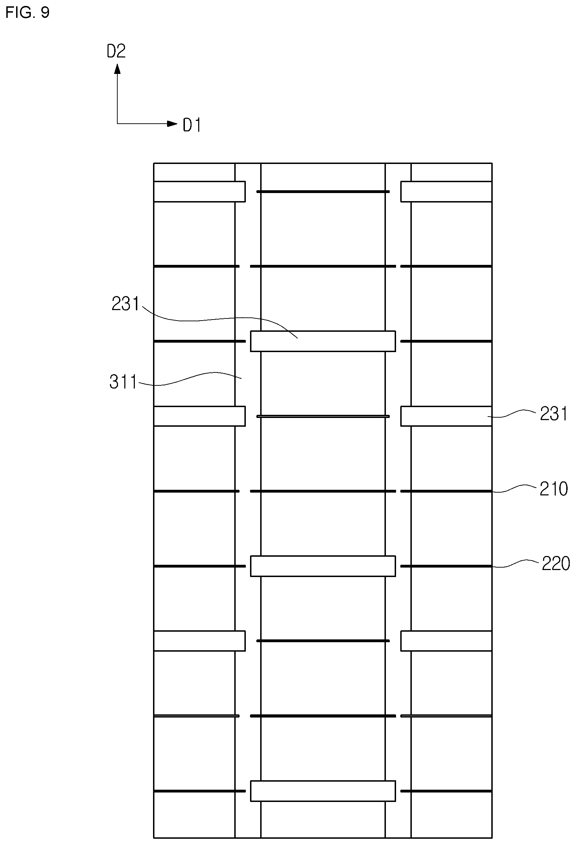

FIG. 1 is a perspective view showing the overall appearance of a heavy duty tire according to an embodiment of the present invention, FIG. 2 is a perspective view showing the tread in an initial wear state of a heavy duty tire according to an embodiment of the present invention, FIG. 3 is a top view of the tread in an initial wear state of a heavy duty tire according to an embodiment of the present invention, FIG. 4 is a perspective view showing the groove structure of a heavy duty tire according to an embodiment of the present invention, FIG. 5A to 5C are cross-sectional views showing first to third groove regions of a heavy duty tire according to an embodiment of the present invention, FIG. 6 is a perspective view of the tread in an intermediate wear state of a heavy duty tire according to an embodiment of the present invention, FIG. 7 is a top view of the tread in an intermediate wear state of a heavy duty tire according to an embodiment of the present invention, FIG. 8 is a perspective view of the tread in a final wear state of a heavy duty tire according to an embodiment of the present invention, FIG. 9 is a top view of the tread in a final wear state of a heavy duty tire according to an embodiment of the present invention.

Referring to FIGS. 1 to 9, the heavy duty tire according to an embodiment of the invention, which includes a tread (100), sipes (200) arranged in the axial direction (D1) at predetermined intervals along the circumferential direction (D2) of the tread (100), and grooves (300) arranged in the circumferential direction (D2) at predetermined intervals along the axial direction (D1) of the tread (100).

The tread (100), as shown in Fig. 1, is formed in an annular shape to contact the road surface and provide traction. It is made of rubber with excellent wear resistance and durability to withstand cuts and impacts. In the description, the axial direction (D1) refers to the direction parallel to the tire's rotation axis, the circumferential direction (D2) is along the outer perimeter of the tread, and the depth direction (D3) points inward toward the tire axis from the tread surface.

The sipes (200) have a relatively smaller cross-sectional area compared to the grooves (300), are formed as a shallow recess extending from the surface of the tread (100) in the depth direction (D3). As shown in Fig. 2, the sipes (200) are formed in the axial direction (D1) of the tread (100) and are arranged at predetermined intervals along the circumferential direction (D2).

The sipes (200) include a first sipe (210) having a first lateral channel (211) near the tread surface, a second sipe (220) having a second lateral channel (221) disposed below the first channel in the depth direction (D3), and a third sipe (230) having a third lateral channel (231) further below in the depth direction.

The bottom of the first lateral channel (211) is aligned in height with the top of the second lateral channel (221), and likewise, the bottom of the second with the top of the third. Each of the sipes (210, 220, 230) has the same depth from the surface of the tread to ensure consistent structural integrity.

The cross-sectional shapes of the lateral channels (211, 221, 231) are depicted as rectangular but may vary-e.g., circular, elliptical, or rhombic.

The sipes (200) are arranged in repeating sequences (e.g., 1st-2nd-3rd or 1st-3rd-2nd) along the circumferential direction (D2). Also, as shown in Figs. 2 and 3, the sipes (200) are divided by grooves (300) in the axial direction (D1), with alternating adjacency patterns (e.g., third sipes adjacent to first sipes, first sipes adjacent to second sipes, etc.).

The grooves (300), being wider and deeper than the sipes, extend in the depth direction (D3) and is formed in the circumferential direction (D2) of the tread. It includes a first groove (310) with a first main channel (311) connected to the third lateral channel (231), a second groove (320) with a second main channel (321) connected to the second lateral channel (221) and also incorporating the first main channel (311), a third groove (330) with a third main channel (331) connected to the first lateral channel (211) and also incorporating the first main channel (311).

The grooves (300) are arranged circumferentially in alignment with their respective sipes, and their sequence ensures effective communication between lateral and main channels. The grooves (300) may be formed at the same depth and may be continuous or segmented.

The lower part of the first groove (310) may have a larger cross-sectional area, forming the first main channel (311).

The second groove (320) may contain the first main channel (311) at its lower part and the second main channel (321) at the middle.

The third groove (330) may include the first main channel (311) at the lower part and the third main channel (331) at the upper part.

To ensure smooth fluid flow between channels:
The height of the first main channel (311) may be 80-120% of that of the first lateral channel (211).

The height of the second main channel (321) may be 80-120% of that of the second lateral channel (221).

The height of the third main channel (331) may be 80-120% of that of the third lateral channel (231).

Additionally, the lengths of the second and third main channels (321, 331) in the circumferential direction may differ by ±5-10% from the spacing between adjacent sipes. They may also be at least 5 mm longer than adjacent sipes at both ends.

Although three lateral and main channels are described, the number may vary (e.g., four or more), depending on the tread's thickness.

Accordingly, in the heavy duty tire according to an embodiment of the present invention configured as described above, the flow of fluid occurring on the tread (100) according to wear of the tread (100) is explained as follows.

Initial Wear Stage (Figs. 2, 3): The first lateral channel (211) and third main channel (311) are exposed, forming flow paths that allow water to be discharged axially, with residual fluid guided circumferentially via the grooves.

Intermediate Wear Stage (Figs. 6, 7): The second lateral channel (221) and second main channel (321) become exposed, creating new axial flow paths, with continued circumferential drainage via grooves.

Final Wear Stage (Figs. 8, 9): The third lateral channel (231) and first main channel (311) are exposed. Fluid enters from the tread surface and is discharged axially via these paths and circumferentially via grooves.

Through this structure, the tire ensures continuous drainage performance even as the tread wears, minimizing loss of braking, traction, and steering stability.

So far, detailed embodiments of the heavy duty tire according to the disclosure have been described. However, it is obvious that various modifications may be made without departing from the scope of the disclosure.

Therefore, the scope of the disclosure should not be limited to the above-described embodiments, but should be defined not only by the claims which will be described below but also by equivalents of the claims.

Thus, it should be understood that the embodiments described above are merely for illustrative purposes and not for limitation purposes in all aspects. The scope of the disclosure is defined by the claims which will be described below rather than by the detailed description, and all changes or modifications derived from the meaning and scope of the claims and their equivalent concepts should be interpreted as being included in the scope of the disclosure.

## Claims

1. A heavy duty tire comprising:
a tread contacting the road surface;
sipes formed in the axial direction of the tread and arranged at predetermined intervals in the circumferential direction of the tread; and
grooves formed in the circumferential direction of the tread and arranged at predetermined intervals in the axial direction of the tread,
wherein the sipes comprise:
a first sipe including a first lateral channel provided on the surface side of the tread,
a second sipe including a second lateral channel provided below the first lateral channel in the depth direction of the tread, and
a third sipe including a third lateral channel provided below the second lateral channel in the depth direction of the tread,
and the grooves comprise:
a first groove including a first main channel communicating with the third lateral channel,
a second groove including a second main channel communicating with the second lateral channel and the first main channel, and
a third groove including a third main channel communicating with the first lateral channel and the first main channel.

2. The heavy duty tire according to claim 1,
wherein the sipes are sequentially and repeatedly arranged along the circumferential direction of the tread in the order of the first sipe, the second sipe, and the third sipe,
and the grooves are arranged such that the third groove is located near the first sipe, the second groove near the second sipe, and the first groove near the third sipe in the circumferential direction of the tread.

3. The heavy duty tire according to claim 1 or 2,
wherein the sipes are sequentially and repeatedly arranged along the circumferential direction of the tread in the order of the first sipe, the third sipe, and the second sipe,
and the grooves are arranged such that the third groove is located near the first sipe, the second groove near the second sipe, and the first groove near the third sipe in the circumferential direction of the tread.

4. The heavy duty tire according to any of the preceding claims,
wherein the sipes are divided in the axial direction of the tread by the grooves, and the third sipes are disposed adjacent to both sides of the first sipe in the axial direction of the tread,
the first sipes are disposed adjacent to both sides of the second sipe in the axial direction,
and the second sipes are disposed adjacent to both sides of the third sipe in the axial direction.

5. The heavy duty tire according to any of the preceding claims,
wherein the lower end of the first lateral channel is located at the same height in the depth direction of the tread as the upper end of the second lateral channel,
and the lower end of the second lateral channel is located at the same height in the depth direction as the upper end of the third lateral channel.

6. The heavy duty tire according to any of the preceding claims,
wherein the first, second, and third grooves are formed continuously in the circumferential direction of the tread.

7. The heavy duty tire according to any of the preceding claims,
wherein the second main channel has a height in the depth direction of the tread that is between 80% to 120% of the height of the second lateral channel,
and the third main channel has a height in the depth direction of the tread that is between 80% to 120% of the height of the first lateral channel.

8. The heavy duty tire according to any of the preceding claims,
wherein the lengths of the second and third main channels in the circumferential direction of the tread are 5% to 10% longer or shorter than the interval between adjacent sipes in the circumferential direction of the tread.

9. The heavy duty tire according to any of the preceding claims,
wherein both ends of the second and third main channels in the circumferential direction of the tread extend at least 5 mm longer than the sipes adjacent thereto in the circumferential direction of the tread.
